# EUROPEAN PATENT SPECIFICATION

(11) **EP 3 586 118 B1**
(45) Date of publication and mention of the grant of the patent: **27.12.2023**
(21) Application number: 18710219.9
(22) Date of filing: 23.02.2018
(51) Int. Cl.: G01N 27/447

(54) **CAPILLARY ELECTROPHORESIS SYSTEM**
KAPILLARELEKTROPHORESESYSTEM
SYSTÈME D'ÉLECTROPHORÈSE CAPILLAIRE

(30) Priority: 24.02.2017 US 201762463467 P
(43) Date of publication of application: 01.01.2020
(73) Proprietor: Life Technologies Corporation, Carlsbad, CA 92008 (US)
(72) Inventor: LIM, Gary, Carlsbad California 92009 (US); LIU, David, Carlsbad California 92009 (US); LI, Peng, Ridgewood New Jersey 07450 (US); CAO, Bin, Carlsbad California 92009 (US); HIRANO, Kirk, Carlsbad California 92009 (US); DUKHOVNY, Alexander, San Francisco California 94127 (US); DIXON, John, Moss Beach California 94038 (US)
(74) Representative: Ziermann, Oliver
(86) International application number: PCT/US2018/019399
(87) International publication number: WO 2018/156880

(56) References cited:
- WO-A1-2004/092721
- WO-A1-2015/134925
- WO-A1-2016/205428
- US-A- 5 922 185

## Description

### TECHNICAL FIELD

The present disclosure relates to a multi-capillary electrophoresis apparatus and related devices, systems, and methods.

### BACKGROUND

Capillary electrophoresis devices generally have certain major components that include, for example, one or more capillaries (e.g., arranged in an array), a separation medium source for providing medium to the capillaries (e.g., a polymer), a sample injection mechanism, an optical detection component, an electrode, and anode buffer source on one end of the capillaries, and a cathode buffer source on the other end of the capillaries. Capillary electrophoresis devices generally also include various heating components and zones to regulate the temperature of various components. Regulating the temperature can improve quality of results.

To provide the major components of a capillary electrophoresis device while regulating the temperature of many of these components, some capillary electrophoresis devices use multiple structures to house the components, with the multiple structures being coupled together to provide a working capillary electrophoresis device. Using multiple structures has disadvantages. For example, each of the interconnected structures may require its own temperature regulating mechanisms, thus creating independent temperature control zones which may use associated individual temperature control mechanisms. A multi-structure design also increases the overall number of components, complicates the temperature control scheme, and increases the risk of component failure.

Moreover, using an electrophoresis apparatus with multiple interconnected structures can be relatively complex. For example, attaching the separation medium (hereinafter referred to as "polymer") source to the capillary array can be complicated and runs the risk of introducing bubbles or other artifacts each time the array is detached and attached to the polymer source. Moreover, the user, rather than the manufacturer, generally must attach the buffer source to the array, and must do it multiple times through the life of the capillary array.

WO 2004/092721 A1 and WO 2016/205428 A1 both disclose a biological analysis device for performing capillary electrophoresis comprising a holding portion for receiving a portion of a removable cartridge comprising capillaries, an optical detector for detecting light emission from the analyzed sample and a temperature regulation section for maintaining the capillaries at a temperature higher than ambient temperature.

It is therefore desirable to provide a capillary electrophoresis apparatus with a reduced number of interconnected structures to reduce the number of necessary heating/temperature control zones, reduce user handling of the structures, reduce likelihood of component failure, reduce introduction of bubbles and other artifacts into the apparatus, and facilitate overall usage of the apparatus.

### SUMMARY

According to the invention defined in the independent claim 1, a biological analysis device for performing capillary electrophoresis includes a voltage section configured to generate a voltage differential across a cathode connector and an anode connector, an optical detector system configured to detect light emission from a sample, a temperature regulation section, and a cartridge holding portion configured to receive at least a portion of a removable cartridge comprising one or more capillaries and a separation medium container. The biological analysis device further includes one or more actuators configured to actuate components of the removable cartridge when the removable cartridge is received in the cartridge holding portion. The cartridge holding portion comprises a refrigeration section configured to refrigerate a separation medium stored in the separation medium container at a temperature lower than ambient temperature.

### BRIEF DESCRIPTION OF THE DRAWINGS

FIG. 1 is a schematic representation of a biological analysis device according to an exemplary embodiment of the disclosure.
FIG. 2 is a perspective view of a user-replaceable cartridge for a biological analysis device according to an exemplary embodiment of the disclosure.
FIG. 3 is an interior view of the user-replaceable cartridge according to the exemplary embodiment of FIG. 2.
FIG. 4 is perspective view of a fluid delivery assembly of the user-replaceable cartridge according to the exemplary embodiment of FIG. 2.
FIG. 5 is a plan view of a portion of the fluid delivery assembly according to the exemplary embodiment of FIG. 4.
FIG. 6 is a perspective view of two component portions of a fluid delivery assembly according to the exemplary embodiment of FIG. 4.
FIG. 7 is a side view of a detector cell of a user-replaceable cartridge according to the exemplary embodiment of FIG. 2.
FIG. 8 is an exploded perspective view of the detector cell of FIG. 7.
FIG. 9 is a perspective view of a user-replaceable cartridge being inserted within a capillary electrophoresis device according to an exemplary embodiment of the present disclosure.
FIG. 10 is an interior view of a capillary electrophoresis device of FIG. 9.
FIG. 11 is an interior view of a capillary electrophoresis device according to the exemplary embodiment of FIG. 9 with a user-replaceable cartridge partially loaded into the capillary electrophoresis device.
FIG. 12 is another partial interior view of a capillary electrophoresis device of FIG. 9.
FIG. 13 is a perspective view of a fluid delivery assembly of a user-replaceable cartridge according to the embodiment of FIG. 2.
FIGS. 14A-14C are schematic views showing operational states of the fluid delivery assembly of the cartridge of FIG. 2.
FIG. 15 is another interior view of a capillary electrophoresis device of FIG. 9.
FIG. 16 is an enlarged view of a detector cell of a user-replaceable cartridge according to the exemplary embodiment of FIG. 2.
FIG. 17 is another interior view of a capillary electrophoresis device according to the exemplary embodiment of FIG. 9.
FIG. 18 is an enlarged view of a cathode block of the user-replaceable cartridge of FIG. 2.
FIG. 19 is a side, interior view of a user-replaceable cartridge coupled with a heating device of a capillary electrophoresis device according to an exemplary embodiment of the disclosure.
FIG. 20 is a perspective view of a user-replaceable cartridge with protective devices installed according to an exemplary embodiment of the disclosure.

### DETAILED DESCRIPTION

Various exemplary embodiments described herein provide a simplified workflow for nucleic acid sequencing. The section headings used herein are for organizational purposes only and are not to be construed as limiting the described subject matter in any way.

Reference will be made in detail to the various aspects of the disclosure, examples of which are illustrated in the accompanying drawings. Wherever possible, the same reference numbers will be used throughout the drawings to refer to the same or like parts.

In this detailed description of various exemplary embodiments, for purposes of explanation, numerous specific details are set forth to provide a thorough understanding of the embodiments disclosed. One skilled in the art would appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

Unless defined otherwise, all technical and scientific terms used herein have the same meaning as is commonly understood by one of ordinary skill in the art to which the various embodiments described herein belongs. When definitions of terms in incorporated references appear to differ from the definitions provided in the present teachings, the definition provided in the present teachings shall control.

It will be appreciated that the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present disclosure and claims.

While the present description is set forth in conjunction with various exemplary embodiments, it is not intended that the present teachings be limited to such embodiments. On the contrary, the present teachings encompass various alternatives, modifications, and equivalents, as would be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the spirit and scope of the various embodiments.

Generally, in the case of providing instruments to biological laboratories for biological sequencing, a relatively straightforward and uncomplicated workflow can be beneficial for at least the following reasons. First, laboratories are frequently concerned with conducting experiments economically which can include utilizing lesser trained individuals interfacing with the instruments. Second, reducing user-interaction time with the instrument can increase the number of experiments that can be run in a given time period.

The present disclosure relates to biological analysis devices configured to have a relatively simple workflow compared to conventional devices. For example, the present disclosure contemplates including various components of the biological analysis device within a user-replaceable cartridge that interfaces with an analysis device and that can easily be replaced by a user of the device. The cartridge includes various subsystems, and the particular subsystems included as part of the user-replaceable cartridge may be chosen to promote ease of use, reduce the number of operations required to be performed by the user, and reduce the likelihood of user error adversely impacting the performance of the biological analysis device.

For example, the user-replaceable cartridge may include a fluidics section that integrates multiple fluid storage portions (e.g., reservoirs, containers, etc.) and a manifold section that may include fluid control devices, such as one or more valves and one or more fluid transfer devices. Including the fluid storage portions as part of the user-replaceable cartridge may increase the ease of use and reliability of the biological analysis device by reducing (e.g., eliminating) the likelihood that user error will introduce air or other contaminates into the fluidics section of the biological analysis device.

In various exemplary embodiments, the user-replaceable cartridge also includes various features that interface with features of the analysis device. For example, the fluidics section of the user-replaceable cartridge can include features that interface with an actuation section of the analysis device configured to manipulate the features of the fluidics section, such as the valves and/or fluid transfer devices.

In various exemplary embodiments, the biological analysis device includes features configured to regulate temperature of various portions of the user-replaceable cartridge to enhance analysis performance of the biological analysis device and to simplify a workflow of the biological analysis device. For example, the analysis device may include a temperature regulation section configured to maintain a portion of the user-replaceable cartridge at a temperature higher than ambient temperature. For example, the analysis device may be configured to warm a capillary section of the user-replaceable cartridge to an elevated temperature to facilitate analysis of sample. The biological analysis device also may include a cooling device configured to maintain a portion of the user-replaceable cartridge at a temperature lower than ambient. For example, the analysis device may be configured to cool a polymer storage container below an ambient temperature to maximize (e.g., increase) useable life of a polymer separation material stored in a polymer storage container of the user-replaceable cartridge.

In some exemplary embodiments, the biological analysis device includes various features that automate portions of the workflow. For example, to install the user-replaceable cartridge within the analysis device, the user may insert the cartridge within a cartridge holding portion of the analysis device, and the cartridge holding portion may move in an automated fashion to fully install the cartridge in the analysis device for use.

The user-replaceable cartridge and the analysis device may also include features configured to provide information to the user or other personnel regarding the usable lifetime (e.g., provide an expiration date) of the cartridge. For example, in one embodiment, the user-replaceable cartridge includes an identification device such as a radio-frequency identification tag, a barcode, or other information readable by the analysis device, which then may provide information regarding the cartridge through a user interface. Such information regarding the cartridge includes, but is not limited to, for example, the number of times the cartridge has been used, the number of times the cartridge still may be used, the amount of time since installation of the cartridge, an expiration date of the cartridge, etc.

Such features may simplify the user workflow associated with the biological analysis device, reduce the likelihood of user error adversely affecting performance of the biological analysis device, and reduce the necessary training and experience for individual users to perform analyses with the biological analysis device. Additional descriptions related to the functionality of other biological analysis devices are contained in Int'l Pub. Nos. WO 2015/134945 A1 and WO 2015/134943 A1.

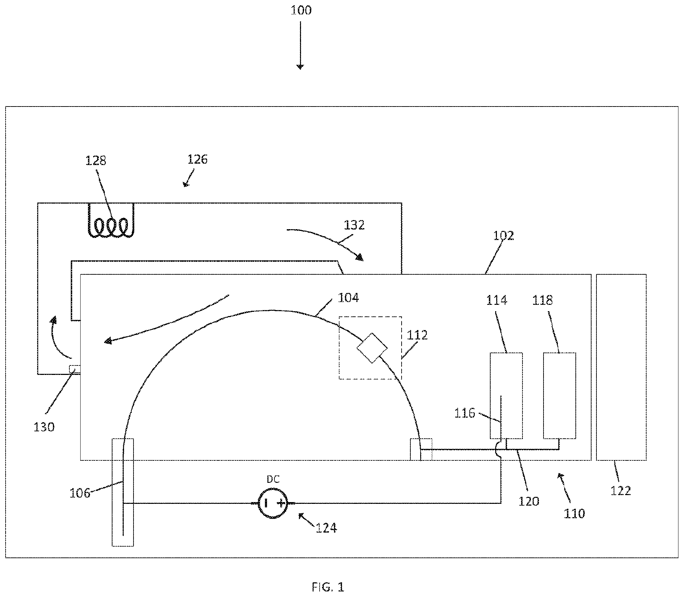

FIG. 1 depicts a schematic view of a biological analysis device 100 according to an exemplary embodiment of the disclosure. The biological analysis device 100 is configured to perform capillary electrophoresis and includes a cartridge 102 that is configured to be easily replaceable by a user (e.g., operator or other personnel) of the biological analysis device 100. The cartridge 102 combines various elements of the biological analysis device within a multi-function, integrated, easily replaceable unit. For example, the cartridge 102 includes one or more capillaries 104 (only one depicted in FIG. 1), one or more cathodes 106 coupled with a cathode end of the one or more capillaries 104, and a fluidics section 110. The cartridge 102 also includes a detection section 112 including various components configured to interface with an optical detection system (not shown) of the biological analysis device 100.

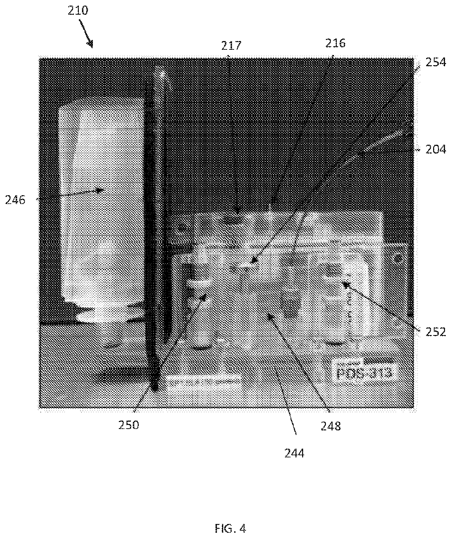

The fluidics section 110 includes one or more storage devices (e.g., reservoirs, containers) that contain a separation medium (e.g., a polymer gel) and a buffer. In the exemplary embodiment of FIG. 1, the fluidics section 110 includes a buffer reservoir 114 and a separation medium container 118. The fluidics section 110 further includes a manifold 120 configured to fluidically couple the buffer reservoir 114 and the separation medium container 118 with an anode end of the one or more capillaries 104. The manifold 120 may include one or more valves and one or more fluid transfer devices, for example, as discussed in greater detail below in connection with FIGS. 4-6.

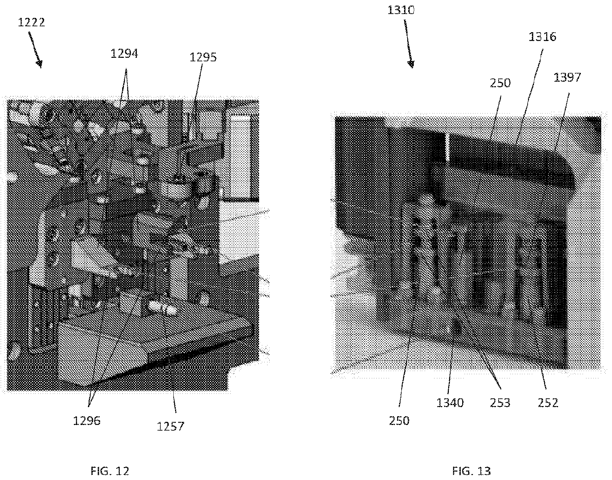

The biological analysis device 100 includes an actuation section 122 configured to interface with the fluidics section 110. For example, the actuation section 122 may be configured to actuate one or more fluid control devices, such as one or more valves and/or fluid transfer devices of the fluidics section 110, as described in detail in connection with FIGS. 12 and 13.

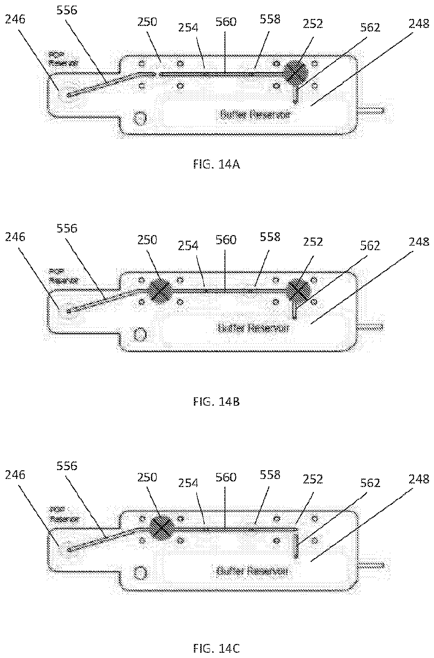

The biological analysis device 100 includes a voltage section 124 configured to generate a voltage potential between the cathode 106 and an anode 116 that is electrically coupled with a buffer contained in the buffer reservoir 114. In use, the one or more capillaries are filled with the polymer separation medium as discussed in connection with FIGS. 14A-14C, and an electrically conductive fluid connection is established between the one or more capillaries 104 and the anode 116 through the buffer. A voltage differential is applied between the cathode 106, which is also submerged in a buffer, and the anode 116. As one having ordinary skill in the art would be familiar with, the voltage differential causes charged analytes to migrate through the one or more capillaries 104, which are filled with the separation medium, where the analytes separate and are detected in the detection section 112 using the optical detector device of the biological analysis device 100.

The biological analysis device 100 further includes a temperature regulation section 126 that regulates the temperature of the one or more capillaries 104. The temperature regulation section 126 is configured to mate with the cartridge 102 and includes a heating element 128, a temperature sensor (e.g., a thermistor) 130, and an air movement device (not shown) that generates a flow of warmed air 132 through the cartridge 102 to maintain the temperature of the one or more capillaries 104 at a desired value.

The components associated with the user-replaceable cartridge 102 may be housed in a cartridge housing, and the cartridge housing may include one or more features configured to interface with features of the biological analysis device 100. For example, various features of the cartridge 102 may interface with features of the biological analysis device 100 to ensure correct positioning and alignment of the cartridge 102, and its associated components, and to enable the biological analysis device 100 to actuate components of the fluidics section 110. Further interfacing features enable the cartridge 102 to interface with the temperature regulation section 126 and the voltage section 124.

The interface between the cartridge 102 and the biological analysis device 100, and the particular division of functional components between the cartridge 102 and the biological analysis device 100 may be configured and selected to facilitate use and reliable operation of the biological analysis device. For example, the present disclosure contemplates that the configuration of the biological analysis device 100 and cartridge 102 is chosen to mitigate, if not eliminate, failure modes due to user error, as further discussed below.

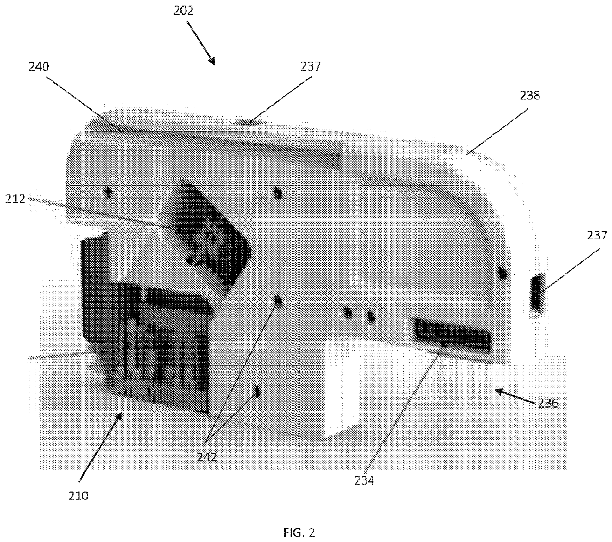

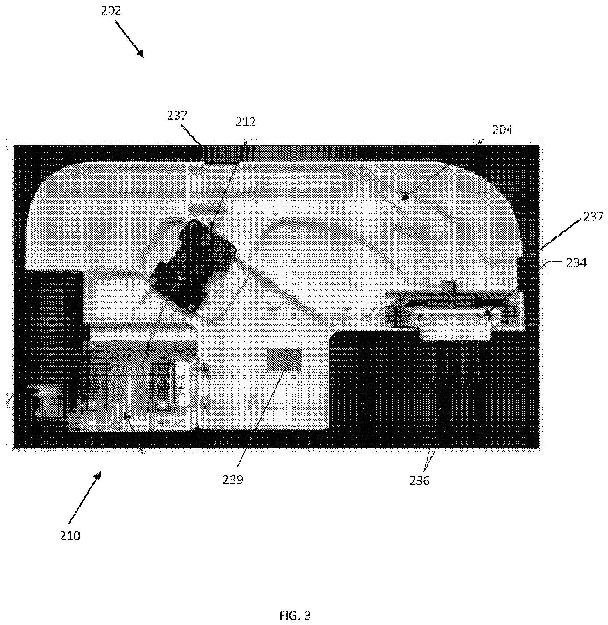

Referring now to FIG. 2, a perspective view of an exemplary embodiment of a user-replaceable cartridge 202 is shown. The cartridge 202 includes a fluidics section 210, a detection section 212, and a cathode block 234 that includes electrically conductive sleeves 236 in which ends of the one or more capillaries 204 (shown in FIG. 3) are affixed. The various components of the user-replaceable cartridge 202 are housed in a housing 238, which includes alignment features such as alignment slots 240 and alignment holes 242 configured to interface with features of the biological analysis device 100 (FIG. 1) to align the cartridge 202 within the biological analysis device 100, as discussed in further detail below.

The user-replaceable cartridge 202 may include features configured to interface with features of the biological analysis device to facilitate temperature regulation of the one or more capillaries 204 during use (e.g., during an electrophoresis process). For example, as shown in the exemplary embodiment of FIG. 3, the user-replaceable cartridge 202 includes heating ports 237 configured to couple with corresponding ports on a temperature regulation section of the biological analysis device, such as temperature regulation section 126 (FIG. 1) of the biological analysis device 100 (FIG. 1).

Referring now to FIG. 3, a side view of the user-replaceable cartridge 202 with one side of the housing 238 (FIG. 2) omitted is shown so as to be able view interior parts thereof. Visible in FIG. 3 are the one or more capillaries 204 extending from the fluidics section 210 to the cathode block 234 and into the conductive sleeves 236. The one or more capillaries 204 may be made from a material with suitable optical properties, such as transparency range, UV transmission, and other properties that enhance optical detection through the capillaries. One non-limiting example of a suitable material for the one or more capillaries 204 is fused silica.

The one or more capillaries 204 extend through the detection section 212. In some embodiments, at least a portion of a length of the one or more capillaries 204 is coated externally in a protective material, such as a polymer (e.g., polyimide or another polymer). The protective material coating may protect the one or more capillaries 204 from damage such as scratches, breakage, etc. Because the protective material coating may have different optical qualities as compared to the material of the one or more capillaries 204, when a protective material coating is used, the one or more capillaries 204 can include an uncoated portion at least where the one or more capillaries 204 pass through the detection section 212 to facilitate optical detection (e.g., imaging of analytes within the capillaries) of the one or more capillaries 204 during use of the biological analysis device 100 (FIG. 1).

Referring still to FIG. 3, in some exemplary embodiments, the user-replaceable cartridge 202 includes a component that provides information related to the user-replaceable cartridge 202. For example, the user-replaceable cartridge 202 may include a radio-frequency identification (RFID) tag 239. Using the RFID tag, the biological analysis device 100 can provide to the user (e.g., through a user interface of the biological analysis device 100) information regarding the user-replaceable cartridge 202. For example, such information may include, but is not limited to, information regarding when the user-replaceable cartridge 202 was installed within the biological analysis device, a number of times the user-replaceable cartridge 202 has been used, an expiration date of the user-replaceable cartridge 202, and other information. While the identifying information is provided by the RFID tag 239 in FIG. 3, in other exemplary embodiments, the identifying information may be provided by a bar code, by a cartridge serial number, by a QR code, or by any other identification mechanism suitable for being scanned, read, or otherwise transmitted to convey information.

Referring now to FIG. 4, the fluidics section 210 of the user-replaceable cartridge 202 is shown in isolation (i.e., not connected to the cartridge 202) for clarity. In the exemplary embodiment shown, the fluidics section 210 includes a fluid delivery manifold 244 in fluid communication with the one or more capillaries 204. The fluid delivery manifold 244 also is in selective fluid communication with one or more containers or reservoirs. For example, in the embodiment of FIG. 4, the fluid delivery manifold 244 is in fluid communication with a separation medium container (e.g., a pouch) 246 configured to contain a polymer separation medium and a buffer reservoir 248 configured to contain a buffer (e.g., a buffer solution). The separation medium container 246 and the buffer reservoir may contain enough polymer separation medium and buffer for multiple discrete uses or runs using the biological analysis device and cartridge. For example, the user-replaceable cartridge 202 may include enough polymer separation medium for over 50 uses, over 100 uses, etc. In an exemplary embodiment, the user-replaceable cartridge 202 includes enough polymer within the separation medium container for 125 uses.

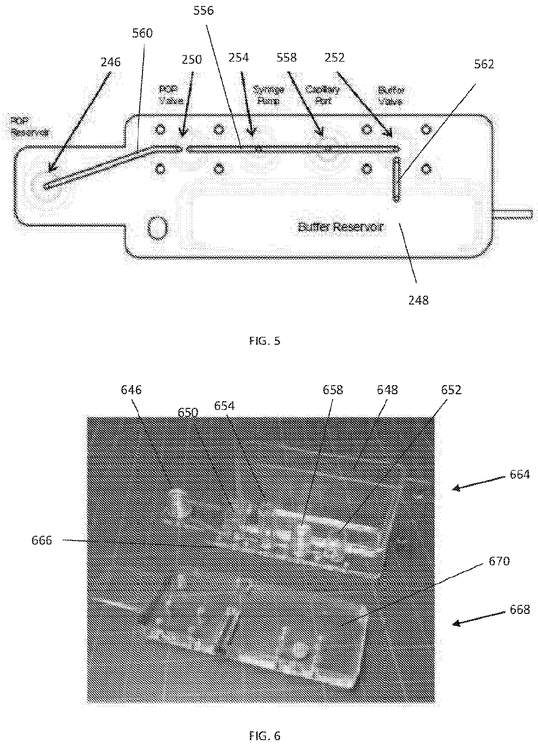

The fluidics section 210 may include fluid control devices. For example, the fluidics section 210 further includes valves 250, 252 configured to open and close fluid passages (illustrated in connection with FIG. 5) in the fluid delivery manifold 244 that selectively connect the separation medium container 246 and the buffer reservoir 248 through the fluid passages to the one or more capillaries 204. The fluidics section 210 further includes a fluid transfer device 254 configured to facilitate transfer of separation medium from the separation medium container 246 into the one or more capillaries 204 through the fluid delivery manifold 244. The fluid transfer device 254 may be a pump, such as a positive displacement pump. In the exemplary embodiment of FIG. 4, the fluid transfer device 254 is a syringe pump. In the embodiment of FIG. 4, the fluid control devices in the cartridge are passive devices. Stated another way, the fluid control devices in the cartridge may require force from an outside source, such as the actuation section 122 (FIG. 1) of the biological analysis device, to operate and cause the motive forces needed to flow fluid from one part to another. However, this arrangement is by way of example only, and cartridges according to other embodiments may include at least a portion of an actuation device to actuate the fluid control devices of the cartridge.

An anode 216 extends into the buffer reservoir 248 to create a conductive path between the voltage section 124 (FIG. 1) and the one or more capillaries 204 when the buffer reservoir 248 and the one or more capillaries 204 are brought into fluid communication as discussed in connection with FIGS. 14A-14C below. The buffer reservoir includes a relief valve 217 configured to release excess pressure within the buffer reservoir 248. For example, during use, the electrical current flowing through the buffer may generate heat and cause the buffer to partially vaporize. The relief valve 217 releases the excess pressure, thereby preventing failure of the buffer reservoir 248 or other portions of the device.

Referring now to FIG. 5, a schematic plan view of the fluid delivery manifold 244 (FIG. 4) is shown. In this exemplary embodiment, the fluid delivery manifold 244 includes a fluid channel 556 that connects a capillary port 558 with the fluid transfer device 254 and with the valves 250, 252. A second fluid channel 560 provides fluid communication between the valve 250 and the separation medium container 246, and a third fluid channel 562 provides fluid communication between the valve 252 and the buffer reservoir 248.

In exemplary embodiments, the fluid delivery manifold 244 is constructed integrally with other portions of the fluidics section 210 to facilitate manufacturing. Additionally, in some exemplary embodiments, the fluid delivery manifold 244 comprises separate components to facilitate manufacturing, and the separate portions are joined to create the fluid delivery manifold 244 and other portions of the fluidics section 210.

For example, referring now to FIG. 6, in an exemplary embodiment, the fluid delivery manifold 244 (FIG. 4) includes a first portion 664 and a second portion 668. The first portion 664 includes various features such as fittings 650, 652 for the valves 250, 252, fitting 654 for the fluid transfer device 254, a buffer reservoir 648, and a fitting 646 for the separation medium container 246 (FIG. 4). In this embodiment, the fluid channels 556, 560, and 562 (FIG. 5) are formed as open channels in a planar surface 666 of the first portion 664 of the fluid delivery manifold 244. In other embodiments, the fluid channels 556, 560, and 562 may be formed as closed channels, or may include open and closed channel portions.

The second portion 668 may have a complementary planar surface 670 configured to mate with the planar surface 666 of the first portion 664 of the fluid delivery manifold 244. The first portion 664 and second portion 668 may be mated together and solvent bonded to form a high-pressure resistant manifold. In some embodiments, the first portion 664 may be manufactured by molding, while the second portion 668 may be manufactured by machining to ensure a high accuracy planar surface and a robust mating connection between the first portion 664 and the second portion 668. In other embodiments, the fluid delivery manifold 244 may be formed as a single component or multiple components by methods such as molding, machining, additive manufacturing, etc. The fluid delivery manifold 244 may comprise (e.g., be made from) materials such as polymers, metals, or other materials. In an exemplary embodiment, the fluid delivery manifold 244 comprises poly(methyl methacrylate).

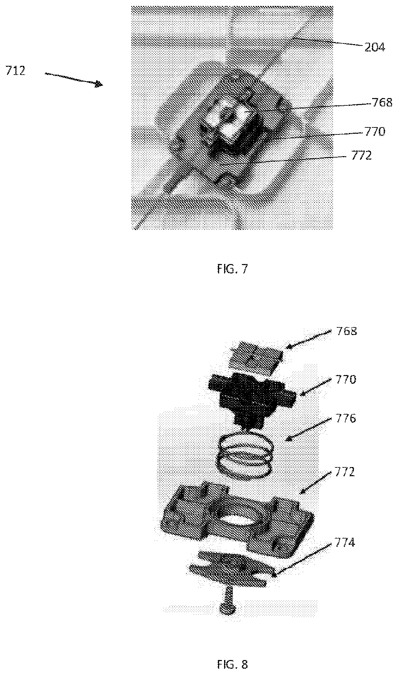

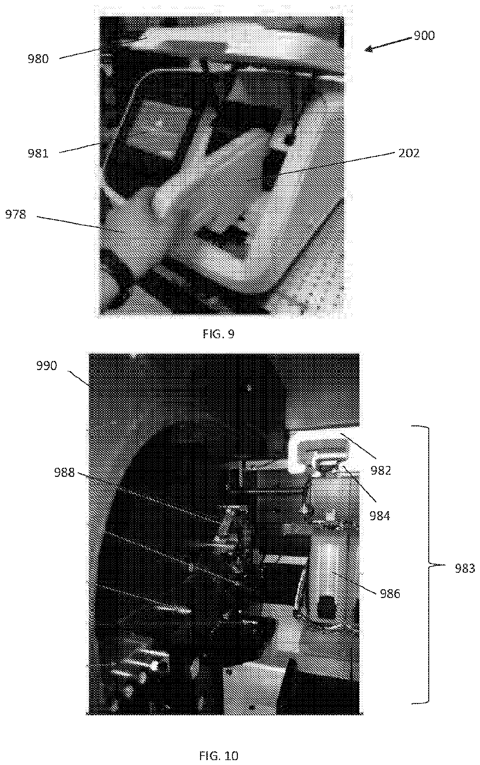

Referring now to FIGS. 7 and 8, a detection section 712 of the cartridge 202 is shown. In an exemplary embodiment, the detection section 712 is movable with respect to the cartridge 202 to facilitate alignment of the detection section 712 with an optical detector device (e.g., optical detector device 988 shown in FIG. 10) of the biological analysis device 100 (FIG. 1). To achieve such movability, the detection section 712 may be configured with various components that couple the detection section 712 to the cartridge 202 in a flexible manner to compensate for potential misalignments between the cartridge 202 and the biological analysis device 100.

For example, as shown in the exemplary embodiment of FIGS. 7-8, the detection section 712 includes a transparent block 768 to which the one or more capillaries 204 are affixed. The transparent block 768 may be made of glass, for example, and is attached to a block mount 770, which is coupled with a mounting plate 772 by a retainer 774. The mounting plate 772 is affixed to the housing 238 (FIG. 2) of the cartridge 202. A compression spring 776 is located between the block mount 770 and the mounting plate 772, thereby enabling relative movement between the block mount 770 and the mounting plate 772. In other embodiments, the block 768 may be mounted to the housing 238 with other flexible materials, such as polymer materials, or may be otherwise configured to move relative to the housing 238. Alternatively, in some embodiments, the block 768 may be rigidly affixed to the housing 238, and any potential misalignment between the detection section 712 and the optical detection system of the biological analysis device 100 (FIG. 1) may be compensated for by movement of the optical detection system of the biological analysis device.

Referring now to FIG. 9, a user-replaceable cartridge 202 is shown being inserted into a biological analysis device 900 by a user 978. The biological analysis device includes an access door 980 enabling access to a compartment into which the cartridge 202 is inserted. The biological analysis device 900 may be configured to automate one or more aspects of installation of the user-replaceable cartridge 202 in the biological analysis device 900 for use in electrophoresis. The biological analysis device 900 may include additional features for facilitating operation by the user 978, such as a display 981, which in exemplary embodiments comprises, for example, a touch screen or other user interface. Additionally or alternatively, the biological analysis device 900 may be configured for connection with, for example, a desktop or laptop computer, tablet device, or other computing device that forms a portion of the user interface of the biological analysis device 900.

Referring now to FIG. 10, a partial interior view of the biological analysis device 900 is shown. In exemplary embodiments, the biological analysis device 900 includes various features configured to interface with features of the user-replaceable cartridge 202 (FIG. 2). For example, the biological analysis device 900 may include features configured to position and/or manipulate the user-replaceable cartridge 202 within the biological analysis device 900 as the user-replaceable cartridge 202 is inserted into the biological analysis device 900 by the user 978. The biological analysis device 900 may include a cartridge holding portion configured to hold and/or align the cartridge 202 with respect to the biological analysis device 900. For example, in the exemplary embodiment of FIG. 10, the biological analysis device 900 includes a cartridge alignment structure 982 with protrusions 984 configured to interface with slots 240 (FIG. 2) of the cartridge housing 238. The cartridge alignment structure 982 forms a portion of a movable carriage assembly 983 configured to automatically move the cartridge 202 into place for use.

The biological analysis device 900 includes a refrigeration section 986 configured to surround the separation medium container 246 (FIG. 2) and maintain the separation medium at a relatively low temperature range when the cartridge 202 is inserted within the biological analysis device 900, thereby extending the usable life of the polymer and enabling the cartridge 202 to be left within the biological analysis device 900 between operations, rather than requiring the user 978 to remove the separation medium container 246 for refrigeration between each use. In an exemplary embodiment, the refrigeration section 986 maintains the separation medium at a lower than ambient temperature to extend the useable life to the separation medium relative to what the usable life would be if the separation medium were held at room temperature. For example, the refrigeration section 986 may be configured to maintain the polymer separation medium at a temperature within a range of from 8 degrees Celsius to 12 degrees Celsius. In an exemplary embodiment, the user-replaceable cartridge has a useable life measured in months when stored within the biological analysis device 900. For example, the useable life of the polymer may be greater than 1 month, greater than 2 months, or more. For example, in the exemplary embodiment of FIG. 10, the separation medium has a usable life of 4 months when the cartridge 202 is stored in the biological analysis device 900 and held at a relatively low temperature via the refrigeration section 986. Usable lives of the separation medium and cartridge of at least 4 months are considered within the scope of the disclosure.

Enabling storage of the cartridge 202 and associated separation medium container 246 within the biological analysis device 900 provides benefits related to ease of use and prevention of contamination. For example, in conventional devices, the user must connect a container containing the polymer separation medium to the device every time the device is used, and then must disconnect the polymer separation container at the conclusion of the analysis for storage, e.g., in a refrigerator separate from the analysis device. Allowing storage of the polymer separation medium in the cartridge within the biological analysis device for extended periods of time as disclosed herein simplifies the workflow for using the biological analysis device and eliminates a possible route for air or other contaminates to enter the fluid section of the device, thereby reducing user workload and improving reliability of the device.

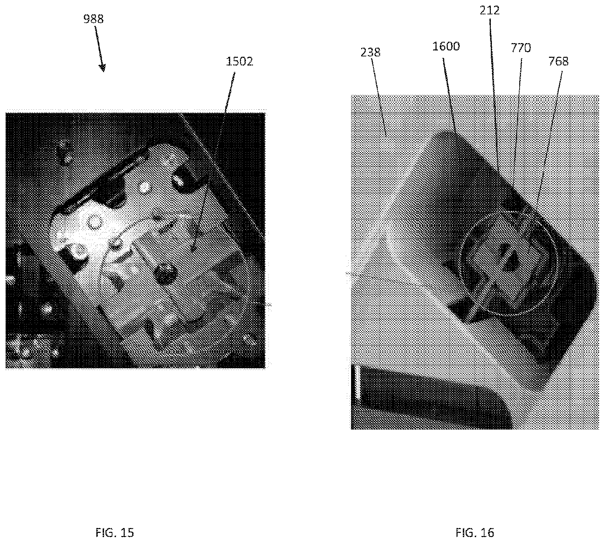

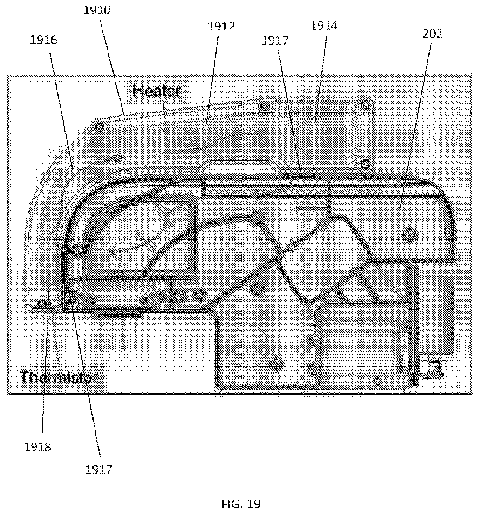

FIG. 10 also shows a portion of an optical detector device 988 configured to interface with the detection section 712 (FIG. 7) of the cartridge 202 to facilitate detecting and collecting optical information from analytes within the capillaries 204 during an electrophoresis procedure. The optical detector device 988 is discussed in further detail in connection with FIG. 15. FIG. 10 also shows a temperature regulation section 990 configured to interface with the cartridge 202 to heat the one or more capillaries 204 (FIG. 3) during an electrophoresis procedure. The temperature regulation section 990 is discussed further below in connection with FIG. 19.

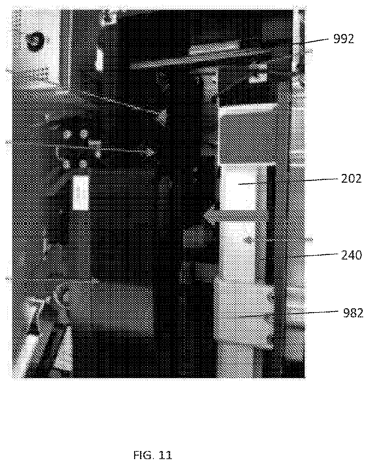

Referring to FIG. 11, a cartridge 202 is shown coupled with the cartridge alignment structure 982. As noted above, the biological analysis device 900 may be configured to automate at least a portion of a procedure for installing the cartridge 202 for use within the biological analysis device 900. For example, in the exemplary embodiment shown in FIG. 11, once the cartridge 202 is inserted and the cartridge alignment structure 982 slides into the alignment slots 240 of the cartridge 202, the biological analysis device 900 is configured to automatically move the cartridge 202 into position for use. In FIG. 11, the biological analysis device 900 is configured to move the cartridge 202 in the direction of the arrow shown in FIG. 11, such as by activating a motor (not shown) that rotates leadscrew 992 through a threaded portion (not shown) of the carriage assembly 983 to move the carriage assembly 983 and cartridge 202 into position for use in the biological analysis device 900. In the exemplary embodiment of FIG. 11, the user inserts the cartridge 202 in a first direction (e.g., along a length of the cartridge 202), and the biological analysis device 900 is configured to automatically move the cartridge in a second direction perpendicular to the first direction (e.g., move the cartridge 202 in the direction of the arrow shown in FIG. 11) to couple the cartridge 202 with the various interfaces of the biological analysis device 900 and prepare the biological analysis device for use as described below. Those having ordinary skill in the art would appreciate that movement of the cartridge in any other direction, or combination of direction, to couple the cartridge with the biological analysis device is within the scope of the disclosure.

For example, FIGS. 12 and 13 show a detailed perspective view of an actuation section 1222 (FIG. 12) configured to interface with a fluidics section 1310 (FIG. 13) of a user-replaceable cartridge (e.g., fluidics section 210 of the cartridge 202 shown in FIGS. 2 and 4). The actuation section 1222 includes a plurality of actuation members 1294 that act on components of the fluidics section 1310, such as valves 250 and 252 and the fluid transfer device 254 (e.g., syringe pump). In this exemplary embodiment, the actuation members 1294 include forked members 1296 that slide respectively over shafts 1397 of the valves 250, 252 and fluid transfer device 254. Movement of the actuation members 1294 (generally upward and downward in the perspective of FIGS. 12 and 13) is transmitted to the valves 250, 252 by interaction between flanges 253 on the shafts 1397 and the forked members 1296. Movement of the valves 250, 252 may open and close passages between the fluid channels 556, 560, and 562 (FIG. 5), thereby fluidically coupling or uncoupling the one or more capillaries with the separation medium container 246 and the buffer reservoir 248 as discussed in connection with FIGS. 14A-14C.

In the exemplary embodiments of FIGS. 12 and 13, the actuation section 1222 includes an anode connector 1295. The anode connector 1295 is configured to contact the anode 1316 (FIG. 13) when the cartridge 202 is installed within the biological analysis device 900, creating an electrically conductive path between the anode 1316 and the voltage section 124 (FIG. 1) of the biological analysis device.

In addition, the actuation section 1222 includes alignment features configured to interface with complementary alignment features of the fluidics section 1310 of the cartridge 202. For example, in the embodiment of FIGS. 12 and 13, an alignment pin 1257 is configured to enter an alignment hole 1340 in the fluidics section 1310 to facilitate alignment between the actuation section 1222 and the fluidics section 1310 when the cartridge 202 (FIG. 2) is installed within the biological analysis device 900 (FIG. 9). Those having ordinary skill in the art would appreciate that a variety of other alignment mechanisms can be used to achieve proper alignment of the actuation section 1222 and the fluidics section 1310.

FIGS. 14A-14C show various states of the valves 250, 252 for use in preparing and performing electrophoresis using the biological analysis device 100 (FIG. 1) based on the movement and positions of the actuation members 1296 of the actuation section 1222 (FIG. 12). In FIG. 14A, the valve 252 is closed, blocking flow between the buffer reservoir 248 and the fluid channel 556, while valve 250 is open, allowing flow between the separation medium container 246 and the fluid channel 556 through fluid channel 560. An actuation member 1294 associated with the fluid transfer device 254 actuates the fluid transfer device 254 (e.g., moving the syringe pump shaft upward) into a position that creates a pressure to draw polymer into the fluid transfer device 254.

In FIG. 14B, the valve 250 associated with the separation medium container 246 is closed, and the actuation member 1294 associated with the fluid transfer device 254 moves (e.g., downward) to a position that increases pressure in the fluid transfer device 254 so as to force the polymer separation medium from the fluid transfer device 254 and into the one or more capillaries 204 (FIG. 3) through the capillary port 558.

In FIG. 14C, the valve 252 is opened, allowing the buffer to flow into the fluid channel 556 and creating an electrically conductive path between the one or more capillaries 204 and the anode 1316 (FIG. 13) in the buffer reservoir 248 (FIG. 4). With the electrically conductive path established between the anode 1316 and the polymer separation material in the one or more capillaries 204, the electrophoresis analysis can proceed with application of a voltage differential as discussed in connection with FIG. 1. Movement of the actuation members 1294 may be controlled by a software algorithm implemented on a controller or other processor of the biological analysis device 900, or be otherwise automated to carry out the electrophoresis procedure with minimal input from the user.

Referring now to FIG. 15, an optical detector device 988 of the biological analysis device 900 is shown. The optical detector device 988 may include, for example, one or more light sources (e.g., lasers) configured to illuminate analytes in the capillaries, and one or more detectors configured to detect light (e.g., fluorescence) emission from the analytes. When the user-replaceable cartridge 202 is installed within the biological analysis device 900, the optical detector device 988 fits within a recess 1600 of the cartridge housing 238 shown in FIG. 16, and at least a portion of the detection section 212 is accepted within a recess 1502 of the optical detector device 988. For example, in the embodiment of FIGS. 15 and 16, the block 768 and block mount 770 are accepted within a recess 1502 of the optical detector device 988. As discussed above in connection with FIGS. 7 and 8, the block 768 is mounted to the cartridge housing 238 in a flexible manner, thereby compensating for any misalignments of the cartridge 202 relative to the optical detector device 988. In the exemplary embodiment of FIGS. 15 and 16, the optical detector device 988 and the detection section 212 are brought together by movement of the cartridge 202 and carriage assembly 983 as discussed in connection with FIG. 11.

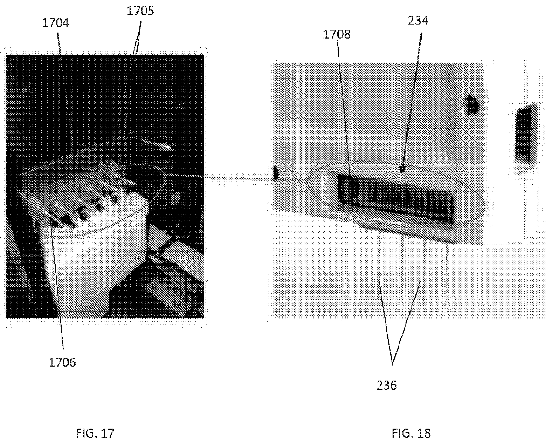

Referring now to FIG. 17, a cathode connector portion 1704 of the biological analysis device 900 (FIG. 9) is configured to form an electrically conductive pathway between a voltage section (such as voltage section 124 shown in FIG. 1) and the cathode end of the one or more capillaries 204 (FIG. 3). For example, in FIG. 17, the cathode connector portion 1704 includes an array of cathode connector pins 1705 that are configured to contact the conductive sleeves 236 through the cathode block 234. The cathode block 234 may be configured to be moveably coupled with the housing 236 of the cartridge 202 (FIG. 2). For example, in some embodiments, the cathode block 234 is configured to be movable with respect to the housing 236 in a similar manner as the detection section 712 discussed in connection with FIGS. 7 and 8. For example, the cathode block 234 may be coupled to the housing 236 by a spring or other flexible member. Alignment pins 1706 are disposed proximate the cathode connector pins 1705 and are received within alignment holes 1708 on the cathode block 234 to align the conductive sleeves 236 with the cathode connector pins 1705. The cathode connector pins 1705 are operably connected to the voltage section 124 (FIG. 1) of the biological analysis device 900. When the cathode connector pins 1705 are in contact with the conductive sleeves 236, and the buffer valve 252 is open as discussed in connection with FIG. 14C, the voltage section 124 of the biological analysis device 900 generates a voltage differential across the anode (e.g., anode 116 in FIG. 1) and the cathode 106 (FIG. 1) to migrate analytes through the one or more capillaries 104 as discussed in connection with FIG. 1.

Referring now to FIG. 19, a side, internal view of an exemplary embodiment of a cartridge 202 and a temperature regulation section 1910 of a biological analysis device 100 (FIG. 1) is shown. The temperature regulation section 1910 includes a heating element 1912 (e.g., an electrical resistance heater, chemical heating device, or another heating device) and an air movement device 1914 (e.g., a blower, fan, etc.). The temperature regulation section 1910 couples with the cartridge 202 and generates a flow 1916 of warmed air through the cartridge 202 to warm the one or more capillaries 204 (FIG. 3) to a desired temperature during use of the biological analysis device 900. For example, in the embodiment of FIG. 19, the temperature regulation section 1910 includes ports 1917 that align with ports 237 (FIG. 2) in the housing 238 of the user-replaceable cartridge 202. During use of the biological analysis device 900, a temperature measurement device 1918 (e.g., a thermistor, a circuit including a thermocouple, etc.) monitors the temperature of the airflow and adjusts the temperature as needed by, e.g., adjusting the air flow rate, adjusting an electrical current through the heating element 1912, cycling the heating element 1912 on and off, or by other methods. As a non-limiting example, the temperature regulation section 1910 may be configured to maintain the one or more capillaries 204 at a nominal temperature, of, for example, 60 degrees Celsius. The temperature regulation section 1910 may be configured to maintain the one or more capillaries 204 within a range of the nominal temperature, for example, within a range of +/- 0.5 degrees Celsius, +/- 1 degree Celsius, or a narrower or wider range of temperatures.

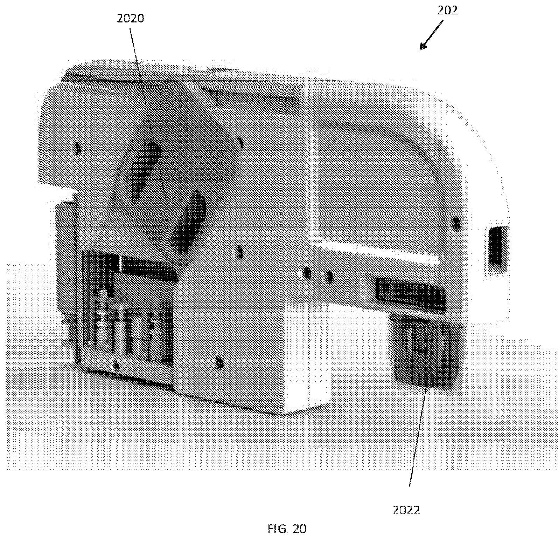

The user-replaceable cartridge 202 may be configured to enable long-term storage of the cartridge 202 on or off the biological analysis device 900 (FIG. 9). For example, the cartridge may be fitted with covers and/or protectors to prevent contamination or drying of various parts of the cartridge 202 while the cartridge 202 is stored off the biological analysis device 900 or during shipping. For example, as shown in FIG. 20, the cartridge 202 may be fitted with a dust cover 2020 over the detection section 712 (FIG. 7) to prevent particulate contaminates from collecting on the one or more capillaries 204 and/or the glass block 768. The dust cover 2020 may be made from, e.g., a polymer material, a fibrous material, or any other suitable material, and may be configured for a press fit, interference fit, snap fit, etc. within the recess 1600 (FIG. 16) of the cartridge housing 238.

With continued reference to FIG. 20, in an exemplary embodiment the user-replaceable cartridge 202 also is fitted with a cathode protector 2022 configured to protect the conductive sleeves 236 from damage or contamination. For example, the cathode protector 2022 may be configured to form a seal against the housing 238 of the user-replaceable cartridge 202. Additionally, the cathode protector may be provided with a polymer or gel material disposed therein to keep the conductive sleeves 236 hydrated during shipping and/or storage.

The present disclosure provides a biological analysis device configured to perform capillary electrophoresis that facilitates overall workflow and usage. For example, the device may result in less training for use and fewer intensive operational activities on the part of a user as compared to previous devices. Various exemplary embodiments of the disclosure reduce the number of actions the user must complete to prepare for sample analysis and perform sample analysis compared to other devices.

While the foregoing exemplary embodiments have been described in some detail for purposes of clarity and understanding, it will be clear to one skilled in the art from a reading of this disclosure that various changes in structure, form, methodology, and detail can be made without departing from the scope of the present disclosure, which is defined by the appended claims.

## Claims

1. A biological analysis device (100, 900) for performing capillary electrophoresis, comprising:
a voltage section (124) configured to generate a voltage differential across a cathode connector and an anode connector;
an optical detector system configured to detect light emission from a sample;
a cartridge holding portion configured to receive at least a portion of a removable cartridge (102, 202), the cartridge (102, 202) comprising one or more capillaries (104, 204) and a separation medium container (118); and one or more actuators configured to actuate components of the removable cartridge (102, 202) when the removable cartridge (102, 202) is received in the cartridge holding portion,
a temperature regulation section (126, 990, 1910) configured to maintain the one or more capillaries (104, 204) at a temperature higher than ambient temperature,
**characterized in that** the cartridge holding portion further comprises a refrigeration section (986) configured to refrigerate a separation medium stored in the separation medium container (118) at a temperature lower than ambient temperature.

2. The biological analysis device (100, 900) of claim 1, wherein the one or more actuators are configured to actuate one or more fluid control devices of the removable cartridge (102, 202).

3. The biological analysis device (100, 900) of claim 1, further comprising a controller programmed to control actuation of the one or more actuators.

4. The biological analysis device (100, 900) of claim, wherein the one or more fluid control devices comprise one or both of a valve and a pump.

5. The biological analysis device (100, 900) of claim 1, wherein the cartridge holding portion comprises a cartridge alignment structure (982) configured to engage with a feature of the cartridge (102, 202) to position the cartridge (102, 202) in a predetermined alignment with components of the biological analysis device.

6. The biological analysis device (100, 900) of claim 5, wherein the cartridge alignment structure (982) is configured to align the cartridge (102, 202) with respect to the optical detector device.

7. The biological analysis device (100, 900) of claim 5, wherein the cartridge alignment structure (982) is configured to move the cartridge (202) from a first position to a second position within the biological analysis device

8. The biological analysis device (100, 900) of claim 1, wherein the temperature regulation section (1910) comprises a heating element (1912) and an air movement element (1914).

9. The biological analysis device (100, 900) of claim 8, wherein the temperature regulation section comprises a plurality of ports (1917) configured to correspond to a plurality of ports (237) in the replaceable cartridge (202).

## Patentansprüche

1. Biologische Analysevorrichtung (100, 900) zum Durchführen einer Kapillarelektrophorese, umfassend:
einen Spannungsabschnitt (124), der konfiguriert ist, um ein Spannungsdifferenzial über einen Kathodenanschluss und einen Anodenanschluss zu erzeugen;
ein optisches Detektorsystem, das konfiguriert ist, um Lichtemission aus einer Probe zu erfassen;
einen Kassettenhaltebereich, der konfiguriert ist, um mindestens einen Abschnitt einer entfernbaren Kassette (102, 202) aufzunehmen, wobei die Kassette (102, 202) eins oder mehrere Kapillarrohre (104, 204) und einen Trennmediumbehälter (118) umfasst; und
einen oder mehrere Aktuatoren, die konfiguriert sind, um Komponenten der entfernbaren Kassette (102, 202) zu betätigen, wenn die entfernbare Kassette (102, 202) in dem Kassettenhaltebereich aufgenommen ist, wobei ein Temperaturregelungsabschnitt (126, 990, 1910) konfiguriert ist, um die eine oder die mehreren Kapillarrohre (104, 204) bei einer Temperatur zu halten, die höher als die Umgebungstemperatur ist,
**dadurch gekennzeichnet, dass** der Kassettenhaltebereich ferner einen Kühlabschnitt (986) umfasst, der konfiguriert ist, um ein in dem Trennmediumbehälter (118) gelagertes Trennmedium bei einer Temperatur, die niedriger als die Umgebungstemperatur ist, zu kühlen.

2. Biologische Analysevorrichtung (100, 900) nach Anspruch 1, wobei der eine oder die mehreren Aktuatoren konfiguriert sind, um eine oder mehrere Fluidsteuervorrichtungen der entfernbaren Kassette (102, 202) zu betätigen.

3. Biologische Analysevorrichtung (100, 900) nach Anspruch 1, ferner umfassend eine Steuerung, die programmiert ist, um die Betätigung des einen oder der mehreren Aktuatoren zu steuern.

4. Biologische Analysevorrichtung (100, 900) nach Anspruch 2, wobei die eine oder die mehreren Fluidsteuervorrichtungen eines oder beide von einem Ventil und einer Pumpe umfassen.

5. Biologische Analysevorrichtung (100, 900) nach Anspruch 1, wobei der Kassettenhaltebereich eine Kassettenausrichtungsstruktur (982) umfasst, die konfiguriert ist, um mit einem Merkmal der Kassette (102, 202) in Eingriff zu kommen, um die Kassette (102, 202) in einer vorbestimmten Ausrichtung mit Komponenten der biologischen Analysevorrichtung zu positionieren.

6. Biologische Analysevorrichtung (100, 900) nach Anspruch 5, wobei die Kassettenausrichtungsstruktur (982) konfiguriert ist, um die Kassette (102, 202) in Bezug auf die optische Detektorvorrichtung auszurichten.

7. Biologische Analysevorrichtung (100, 900) nach Anspruch 5, wobei die Kassettenausrichtungsstruktur (982) konfiguriert ist, um die Kassette (202) von einer ersten Position in eine zweite Position innerhalb der biologischen Analysevorrichtung zu bewegen.

8. Biologische Analysevorrichtung (100, 900) nach Anspruch 1, wobei der Temperaturregelungsabschnitt (1910) ein Heizelement (1912) und ein Luftbewegungselement (1914) umfasst.

9. Biologische Analysevorrichtung (100, 900) nach Anspruch 8, wobei der Temperaturregelungsabschnitt eine Vielzahl von Anschlüssen (1917) umfasst, die konfiguriert sind, um einer Vielzahl von Anschlüssen (237) in der austauschbaren Kassette (202) zu entsprechen.

## Revendications

1. Dispositif d'analyse biologique (100, 900) destiné à mettre en oeuvre une électrophorèse capillaire, comprenant :
une section de tension (124) conçue pour générer une différence de tension à travers un connecteur de cathode et un connecteur d'anode ;
un système de détecteur optique conçu pour détecter une émission de lumière à partir d'un échantillon ;
une partie de maintien de cartouche conçue pour recevoir au moins une partie d'une cartouche amovible (102, 202), la cartouche (102, 202) comprenant un ou plusieurs capillaires (104, 204) et un récipient de milieu de séparation (118) ; et
un ou plusieurs actionneurs conçus pour actionner des composants de la cartouche amovible (102, 202) lorsque la cartouche amovible (102, 202) est reçue dans la partie de maintien de cartouche, une section de régulation de température (126, 990, 1910) conçue pour maintenir le ou les capillaires (104, 204) à une température supérieure à la température ambiante,
**caractérisé en ce que** la partie de maintien de cartouche comprend en outre une section de réfrigération (986) conçue pour réfrigérer un milieu de séparation stocké dans le récipient de milieu de séparation (118) à une température inférieure à la température ambiante.

2. Dispositif d'analyse biologique (100, 900) selon la revendication 1, dans lequel le ou les actionneurs sont conçus pour actionner un ou plusieurs dispositifs de commande de fluide de la cartouche amovible (102, 202).

3. Dispositif d'analyse biologique (100, 900) selon la revendication 1, comprenant en outre un dispositif de commande programmé pour commander l'actionnement du ou des actionneurs.

4. Dispositif d'analyse biologique (100, 900) selon la revendication 2, dans lequel le ou les dispositifs de commande de fluide comprennent l'une et/ou l'autre parmi une vanne et une pompe.

5. Dispositif d'analyse biologique (100, 900) selon la revendication 1, dans lequel la partie de maintien de cartouche comprend une structure d'alignement de cartouche (982) conçue pour venir en prise avec une caractéristique de la cartouche (102, 202) pour positionner la cartouche (102, 202) dans un alignement prédéterminé avec des composants du dispositif d'analyse biologique.

6. Dispositif d'analyse biologique (100, 900) selon la revendication 5, dans lequel la structure d'alignement de cartouche (982) est conçue pour aligner la cartouche (102, 202) par rapport au dispositif de détecteur optique.

7. Dispositif d'analyse biologique (100, 900) selon la revendication 5, dans lequel la structure d'alignement de cartouche (982) est conçue pour déplacer la cartouche (202) d'une première position à une seconde position au sein du dispositif d'analyse biologique.

8. Dispositif d'analyse biologique (100, 900) selon la revendication 1, dans lequel la section de régulation de température (1910) comprend un élément chauffant (1912) et un élément de mouvement d'air (1914).

9. Dispositif d'analyse biologique (100, 900) selon la revendication 8, dans lequel la section de régulation de température comprend une pluralité d'orifices (1917) conçus pour correspondre à une pluralité d'orifices (237) dans la cartouche remplaçable (202).
